# EUROPEAN PATENT SPECIFICATION

(11) **EP 3 533 216 B1**
(45) Date of publication and mention of the grant of the patent: **26.06.2024**
(21) Application number: 16788674.6
(22) Date of filing: 27.10.2016
(51) Int. Cl.: G03B 37/04, H04N 23/60, H04N 23/698, H04N 23/90, G03B 13/36

(54) **AN OPTICAL ARRANGEMENT FOR FOCUSING IMAGES OF A THREE-DIMENSIONAL SPACE FROM DIFFERENT DIVERGENT PERSPECTIVES ONTO A CAMERA SENSOR**
OPTISCHE ANORDNUNG ZUM FOKUSSIEREN VON BILDERN EINES DREIDIMENSIONALEN RAUMES AUS VERSCHIEDENEN DIVERGENTEN PERSPEKTIVEN AUF EINEN KAMERASENSOR
AGENCEMENT OPTIQUE POUR FOCALISER DES IMAGES D'UN ESPACE EN TROIS DIMENSIONS À PARTIR DE DIFFÉRENTES PERSPECTIVES DIVERGENTES SUR UN CAPTEUR DE CAMÉRA

(43) Date of publication of application: 04.09.2019
(73) Proprietor: Nokia Technologies Oy, 02610 Espoo (FI)
(72) Inventor: KIMMEL, Jyrki Sakari, 33180 Tampere (FI)
(74) Representative: Swindell & Pearson Limited
(86) International application number: PCT/EP2016/075975
(87) International publication number: WO 2018/077413

(56) References cited:
- EP-A1- 3 041 050
- WO-A1-2014/009975
- WO-A1-2015/176298
- CN-A- 103 780 817
- DE-A1-102014 224 903
- JP-A- 2005 204 022
- JP-A- 2016 012 785
- US-A- 6 051 836
- US-A1- 2010 195 007
- US-A1- 2011 242 272
- US-A1- 2015 212 294
- US-A1- 2016 241 840
- US-A1- 2016 295 198

## Description

### TECHNOLOGICAL FIELD

The present invention relates an optical arrangement for focusing images of a three-dimensional space from different divergent perspectives onto a camera sensor.

### BACKGROUND

JP2016012785 (D2) relates to an imaging apparatus that includes a photographic optical system in which a wide-angle optical system and a telescopic optical system are arranged in areas different from each other. According to D2, each of luminous fluxes made incident through the wide-angle optical system and the telescopic optical system is pupil-divided and selectively received by a directional sensor including a plurality of pixels comprising a photoelectric conversion element two-dimensionally arranged. In D2, an image acquisition part acquires each of the wide-angle image received through the wide-angle optical system and the telescopic image received through the telescopic optical system from the directional sensor. According to D2, in the wide-angle optical system and telescopic optical system of the photographic optical system, the directions of photographic optical axes are made different from each other.

US2016/295198 (D6) relates to a depth sensor that comprises at least one imaging sensor, at least one multifocal lens, and a focus analyzer. According to D6, the depth sensor analyzes the in-focus status of electromagnetic radiation, directed by the multifocal lens(es) onto sensing zone(s) of the imaging sensor(s) from spatial zone(s) in a measurement field, to detect the presence of object(s) in the spatial zone(s).

US2016/241840 (D7) relates to a light-field camera includes a main lens configured to form an image of an object, a lens configured to form, on a curved surface, additional images based on the image of the object, and an image sensor configured to function as a curved image sensor and thereby sense the additional images, at least one of the lens and the image sensor including a flat element.

JP2005/204022 (D12) relates to an imaging unit that is equipped with a single imaging element, lens systems which are arranged on optical paths of respective lights guided to the imaging device from a plurality of directions and include wide-angle lenses, and light control elements which are arranged on the optical paths of the respective lights to image the respective lights guided to the imaging element from the plurality of directions selectively on the imaging element by switching their light control characteristics. Then, according to D12, the light control elements which are arranged on the optical paths of the light where the wide-angle lenses are arranged between the light control elements are interposed behind the wide-angle lenses among the lens systems.

WO2015/176298 (D13) relates to an image capture apparatus that includes a first lens for receiving a first image, a second lens for receiving a second image, and a mirror and prism assembly configured to receive the first and second images. According to D13, the apparatus further includes a single image sensor configured to receive the first and second images. According to D13, the first image is projected onto the first side of the single image sensor and the second image is projected onto the second side of the single image sensor.

A recent development has been the manufacture of multi-camera systems that allow images of a three-dimensional space to be captured from different perspectives. Typically, each of the multiple cameras of the multi-camera system captures an image from a different perspective (point of view) and each of these perspectives diverge from an origin. The multiple cameras capture, potentially at the same time, either as still images or video images different portions of the three-dimensional space. In some examples the images that are captured may overlap and it may be possible to create a panoramic image.

The ability to capture an image of a three-dimensional space from the same position within that space but with a different perspective is particularly useful in a virtual reality or augmented reality application.

It would be desirable to provide an improved or different optical arrangement for focusing images of the three-dimensional space from different divergent perspectives.

### BRIEF SUMMARY

According to the invention in the independent claims there is provided an apparatus comprising: a single camera sensor; and multiple optical arrangements for focusing images of a three-dimensional space from different divergent perspectives onto the camera sensor configured for spatially resolved sensing of respective images from different divergent perspectives, wherein: each optical arrangement is configured to provide an optical path from a respective perspective, defined by the optical arrangement, towards a target optical area such that optical paths from different divergent perspectives converge towards the target area; and each of the multiple optical arrangements comprises a prism having two facets on an input side and a focusing lens on an output side, wherein the apparatus is configured such that optical paths from two, different perspectives are incident on different faces of a respective prism and converge towards a respective single focusing lens.

The scope of protection sought for various embodiments of the invention is set out by the independent claim. The examples and features, if any, described in this specification that do not fall under the scope of the independent claims are to be interpreted as examples useful for understanding various embodiments of the invention.

### BRIEF DESCRIPTION

For a better understanding of various examples that are useful for understanding the detailed description, reference will now be made by way of example only to the accompanying drawings in which:
Figs 1A and 1B illustrates examples of an apparatus comprising multiple compound optical arrangements that share one or more shared refractive optical elements;
Fig 2A illustrates an example of divergent perspectives;
Figs 2B and 2C illustrate examples of overlapping images;
Figs 3 and 4 illustrate further examples of an apparatus comprising multiple compound optical arrangements that share one or more shared refractive optical elements;
Fig 5 illustrates an example of a method;
Fig 6 illustrates a single camera sensor configured to simultaneously sense two images from different perspectives; and
Figs 7, 8, 9 illustrate examples of an apparatus that uses a single camera sensor for sensing images from different perspectives.

### DETAILED DESCRIPTION

The examples of the disclosure relate to an apparatus 100 comprising: multiple optical arrangements 30 for focusing images 12 of a three-dimensional space 20 from different divergent perspectives 40 onto one or more camera sensors 10 configured for spatially resolved sensing of respective images 12 from different perspectives 40, wherein each optical arrangement 30 is configured to provide an optical path 50 from a respective perspective 40, defined by the optical arrangement 30, towards a target optical area 70 such that optical paths 50 from different divergent perspectives 40 converge towards the target area 70.

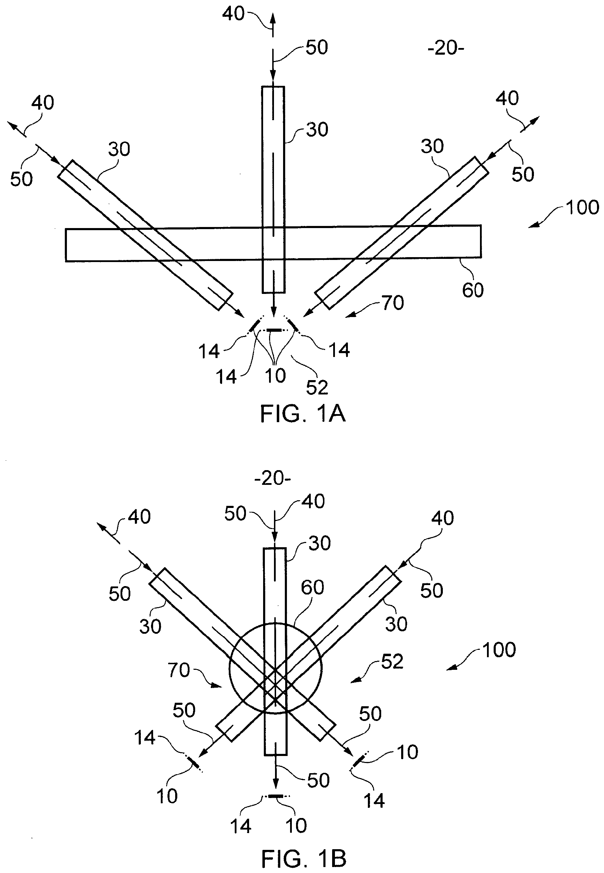

In the example of Figs 1A to Fig 5, the target optical area 70 comprises one or more shared refractive optical elements 60 common to the multiple optical arrangements 30 and providing at least a part of each of the multiple optical paths 50 from the multiple different divergent perspectives 40 to different respective spatially separated camera sensors 10.

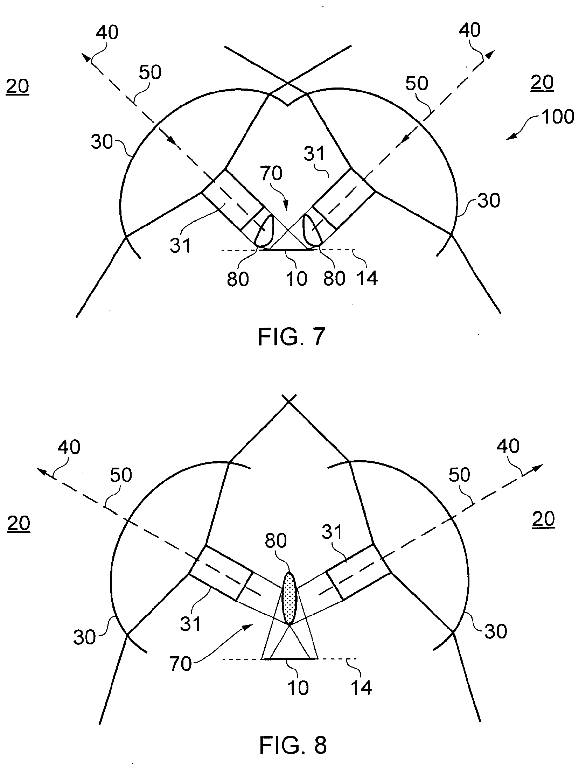

In the example of Figs 1A to Fig 5 and Fig 8, the target optical area 70 comprises one or more optical elements 60, 80 providing as divergent optical paths, at least a part of multiple optical paths 50 from each of the multiple different divergent perspectives to one or more camera sensors. In the example of Figs 1A to Fig 5 one or more optical elements 60 are one or more shared refractive optical elements 60 common to the multiple optical arrangements 80 that provides at least a part of multiple optical paths 50 from each of the multiple different divergent perspectives to spatially separated camera sensors 10. In the example of Fig 8, one or more optical elements at the target optical area 70 are one or more mirrors 80 that reflect the multiple optical paths 50 from each of the multiple different divergent perspectives to a single camera sensor 10.

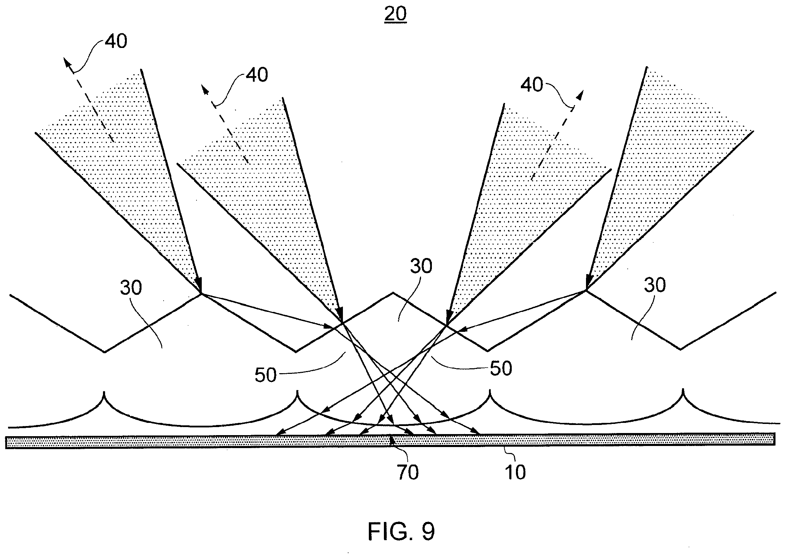

In the examples of Figs 7 and 9, a single camera sensor comprising a plurality of sensels is configured to sense, using different sensels, images 12 from different divergent perspectives 40. In the example of Fig 7, the optical paths 50 from different divergent perspectives 40 converge towards and meet at the camera sensor 10 occupying the target area 70. In the example of Fig 9, the optical paths 50 from different divergent perspectives 40 converge towards and pass through the target area 70 before arriving at the sensor 10.

The term image is used before and at capture to refer to the collection of light rays focused on a camera sensor 10 and is used, after capture, to refer to the camera sensor output as a consequence of image capture. A captured image may, for example, be transiently stored in a buffer, or permanently or semi-permanently stored as an addressable data structure in an addressable memory.

The term 'divergent' means divergent in relation to direction.

An optical path 50 is the path that light will take when travelling through an optical arrangement 30. The term visible light is used to refer to only visible light. The light may be visible light or it may be light outside the visible spectrum such as, but not limited to, near infrared, infrared, near ultraviolet.

In some examples, the apparatus 100 may comprise one or more separate camera sensors 10 for capturing images 12 of the three-dimensional space 20 from different divergent perspectives 40. However, in other examples the apparatus 100 does not comprise the one or more separate camera sensors 10 and these are added later during manufacture or by a user.

The examples described in relation to Fig 1 to 5 include examples of an optical arrangement for focusing images of a three-dimensional space 20 from different divergent perspectives 40 onto one or more camera sensors 10. The examples use one or more shared refractive optical elements 60 that are common to multiple compound optical arrangements 30. This has the advantage of making the apparatus 100 more compact. By at least partially integrating the shared refractive optical elements 60 into each compound optical arrangement 30 used for each of the camera sensors 10, it is possible to make an apparatus 100 that has a more compact design.

The examples described in relation to Fig 1 to 5 relate to an apparatus 100 comprising: multiple compound optical arrangements 30 for focusing images 12 of a three-dimensional space 20 from different divergent perspectives 40 onto respective camera sensors 10, wherein each compound optical arrangement 30 is configured to provide an optical path 50 from a respective perspective, defined by the compound optical arrangement 30, to a different camera sensor 10; and one or more shared refractive optical elements 60 common to the multiple compound optical arrangements 30 and providing at least a part of each of the multiple optical paths 50 from the multiple different divergent perspectives 40.

The use of the term 'compound' in relation to an optical arrangement is the same as its use in relation to lens, it means that the overall optical effect is achieved using multiple optical elements.

In the examples of Figs 1A and 1B, the apparatus 100 comprises multiple separate camera sensors 10. These multiple separate camera sensors 10 lie within non-parallel image planes 14.

The optical paths 50, where they intersect with the image planes 14 of the camera sensors 10, are non-parallel. In the examples described the optical paths 50, where they intersect with the image planes 14 of the camera sensors 10, are orthogonal to the image planes 14.

In the examples of Figs 1A and 1B, the multiple optical paths 50 intersect, or would intersect, at a single location 52. This single location represents an origin of a point of view and each perspective 40 represents a vector passing through this origin defining an orientation of the point of view. The images 12 captured by the multiple cameras are captured with the points of view defined by the different, divergent perspectives 40.

In the example of Fig 1B, the shared refractive optical element 60 is positioned where the multiple optical paths 50 intersect at the origin 52.

Each compound optical arrangement 30 is configured to provide an optical path 50 from a respective perspective 40. Where the optical path 50 meets its respective camera sensor 10 an image 12, defined by the perspective 40 is captured by the camera sensor 10.

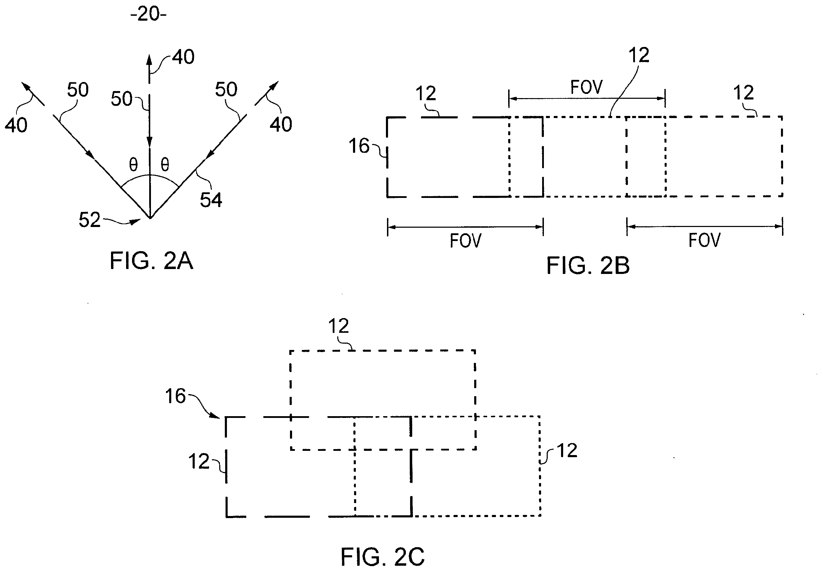

In the example of Fig 2A, the divergent perspectives 40 lie within a common plane 54 and are evenly distributed with the same angular separation ϑ within that plane 54. It can be seen that the vectors defining the divergent perspectives 40 pass through the origin 52. In this example, the optical path 50 is rectilinear and is aligned with the perspective 40.

Each of the multiple compound optical arrangements 30 has an associated field of view FoV. In the example as illustrated in Fig 2B and 2C, the fields of view of at least some of the multiple compound optical arrangements 30 overlap spatially so that they form a continuum (panoramic image 16). In the example of Fig 2B the images 12 captured for different perspectives overlap in a horizontal direction and may be used to create a panoramic image 16. The field of view of the panoramic image in the horizontal direction may be 360° or less. In the example of Fig 2C, the images 12 captured for different perspectives overlap both horizontally and vertically and may be used to create a panoramic image that extends both vertically and horizontally. The field of view of the panoramic image in the horizontal direction may be 360° or less. The field of view of the panoramic image in the vertical direction may be 180° or less, for example up to 90° to a zenith above and down to - up to 90° to a nadir below.

It will therefore be appreciated that the capture of multiple images for multiple different divergent perspectives allows an image of a three-dimensional space 20 to be created by combining the images captured.

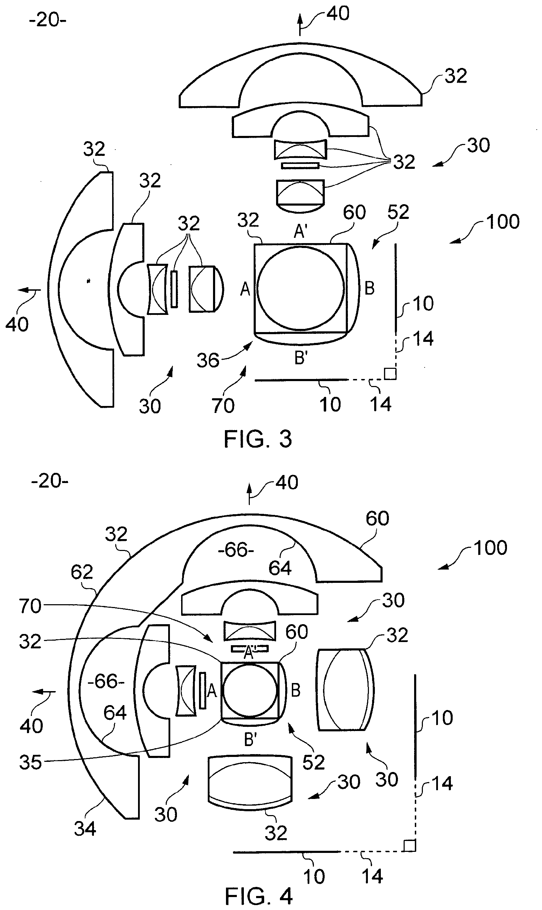

Figs 3 and 4 illustrate further examples of the apparatus 10 as described in relation to Figs 1A and 1B. As previously described, the apparatus 10 may or may not comprise multiple separate camera sensors 10. In this example the apparatus 100 does comprise multiple separate camera sensors 10 for capturing images 12 of a three-dimensional space 20 from different divergent perspectives 40. The multiple separate camera sensors 10 lie within non-parallel image planes 14. In these examples, the image planes 14 are orthogonal but different arrangements are possible.

The apparatus 100 also comprises multiple compound optical arrangements 30 for focusing images 12 of a three-dimensional space 20 from different divergent perspectives 40 onto respective camera sensors 10.

Each compound optical arrangement 30 comprises one or more shared refractive optical elements 60 common to each of the multiple compound optical arrangements 30.

Each compound optical arrangement 30 is configured to provide an optical path 50 from a respective perspective 40, defined by that compound optical arrangement 30, to a different camera sensor 10. The one or more shared refractive optical elements 60 provide at least a part of each of the multiple optical paths 50 from the multiple different divergent perspectives 40.

A compound optical arrangement 30 is an arrangement that comprises multiple elements 32 that are arranged to focus images 12 of a three-dimensional space onto a camera sensor 10. In some, but not necessarily all examples, the compound optical arrangement 30 is a compound refractive element arrangement and is purely refractive comprising only refractive optical elements 32. In some but not necessarily all examples, the compound optical arrangement 30 is or comprises an objective lens arrangement comprising compound lenses 32.

In the illustrated example, but not necessarily all examples, each compound optical arrangement 30 is an arrangement to provide a wide-angle field of view centered on the respective perspective 40.

The optical path 50 (light path) passes through the series of optical elements 32, for example lenses 32, of a compound optical arrangement 30. For the purposes of clarity of description and illustration, the optical paths 50 are not illustrated in Figs 3 and 4.

It will be appreciated that the one or more shared refractive optical elements 60 is common to the multiple compound optical arrangements 30 in that it is present in a first compound optical arrangement 30 which is aligned in a first direction (vertically in Figs 3 and 4) and is simultaneously present in a second compound optical arrangement 30 which is arranged in a second different direction (horizontally in Figs 3 and 4).

In the examples of Figs 3 and 4 the multiple separate camera sensors 10 have non-parallel image planes 14 that are orthogonal to each other.

Although not shown in Figs 3 & 4, the optical paths 50 where they intersect with the image planes 14 of the camera sensors 10 are orthogonal to the image planes 14 as previously described. Also the optical paths 50 as defined by the first and second compound optical arrangements 30 intersect at an origin 52 where a central shared refractive optical element 60 is positioned.

In the example of Fig 3, the central shared refractive optical element 60 is positioned at the origin 52. It is an innermost refractive optical element 32 of the multiple compound optical arrangements 30 and is that part of the multiple compound optical arrangements 30 that is adjacent to the imaging planes 14 of the camera sensors 10.

In the example of Fig 4, the central shared refractive optical element 60 that is located at the origin is an intermediate refractive optical element 60 within a series of refractive optical elements 32. In this example, the central shared refractive optical element 60 is that portion of the multiple compound optical arrangements 30 closest to the image planes [14] of the camera sensors 20.

In the example of Fig 4, the central shared refractive optical element 60 is positioned at the origin 52. It is an intermediate refractive optical element 32 and is an intermediate optical element 32 within a series of optical elements 32. In this example, the intermediate shared refractive optical element 60 is that part of the multiple compound optical arrangements 30 that is neither closest to nor furthest from the imaging planes 14 of the camera sensors 10.

In the example of Fig 4, the apparatus 100 comprises not only an intermediate shared refractive optical element 60 at the origin 52 but also comprises a peripheral shared refractive optical element 60. In this example, the peripheral shared refractive optical element 60 is an outermost objective optical element 60 of the compound optical arrangements 30. That is, the peripheral shared refractive optical element 60 is that part of the compound optical arrangements 30 that is furthest from the image planes 14 of the camera sensors 10 and/or is closest to the three-dimensional space 20 being imaged.

In this example, but not necessarily all examples, the peripheral shared refractive optical element 60 has a continuous exterior surface 62 for each of the different optical paths 50. That is, the exterior surface 62 of the peripheral shared refractive optical element 60 is continuous and is a part of a first optical path 50 through the first compound optical arrangement 30 and is also part of a second optical path 50 through the second compound optical arrangement 30. It should be appreciated that different parts of the peripheral shared refractive optical element 60 are used for the respective first and second optical paths 50.

In this example, but not necessarily all examples, the peripheral shared refractive optical element 60 has a curved exterior surface 62 and an interior surface 64 comprising a concave cavity 66 for each of the different optical paths 50. The concave cavity 66 is aligned with each respective compound optical arrangement 30.

In this example, the curved exterior surface 62 has a spherical shape and the portions of the exterior surface 62 that are part of the first optical path and the second optical path lie on the same continuous spherical surface.

Also in this example, the concave cavity 66 and its interior surface 64 define a part of a sphere that has a smaller radius of curvature than the radius of curvature of the sphere defining the exterior curved surface 62.

It will be appreciated that in each of Figs 3 and 4 the apparatus 40 uses multiple compound optical arrangements 30 that are rectilinear arrangements defining a substantially rectilinear optical path orthogonal to an image plane 14 of a respective camera sensor 10 and aligned with the respective perspective 40. Each of the multiple compound optical arrangements 30 is symmetrical about its respective perspective 40/rectilinear optical path 50 and the one or more shared refractive optical elements 60 is symmetrical with respect to each perspective 40/optical path 50.

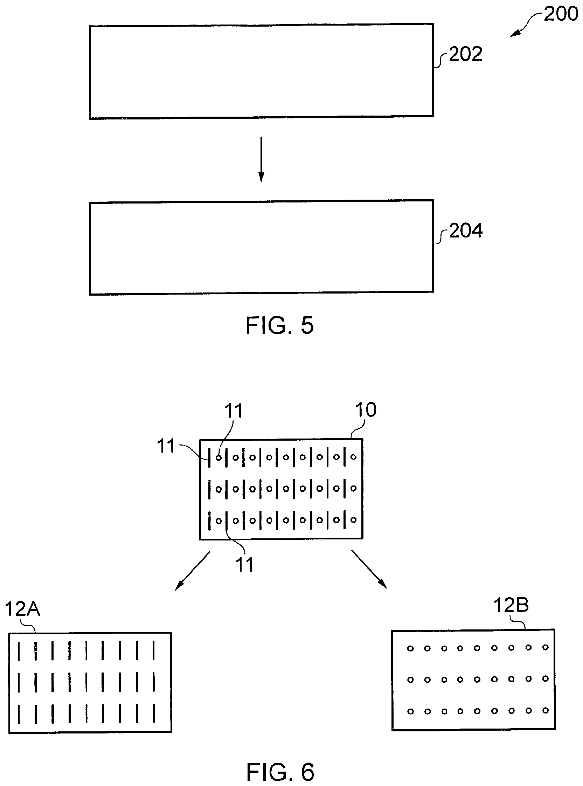

Fig 5 illustrates an example of a method 200 for manufacturing a multi-camera sensor apparatus 100 that captures overlapping images 12 from different divergent perspectives 40 to create a panoramic image 16 comprising:
a block 202 using multiple compound optical arrangements 30 to focus images 12 of the three-dimensional space 20 from different divergent perspectives 40 onto respective camera sensors 10, wherein each compound optical arrangement 30 provides an optical path 50 from a respective perspective 40, defined by the compound optical arrangement 30, to a camera sensor 10; and at block 204 providing a shared refractive optical element 60 as a common element to all the multiple compound optical arrangements 30 so that the shared refractive optical element 30 provides at least a part of each of the multiple optical paths 50.

Figs 7, 8, 9 describe examples of an apparatus 100 that uses a single camera sensor 10 for sensing images 12 from different perspectives 40. As illustrated in Fig 6, the single camera sensor 10 may comprise a plurality of sensels 11 and is configured to sense, using different sensels 11, different images 12A, 12B from different divergent perspectives 40. This provides spatially resolved sensing of the images 12A, 12B. The different images may be read-out of the camera sensor 10 separately in some examples.

In the particular example illustrated in Fig 6, the single camera sensor 10 comprises alternating rows/columns of first sensels (dash) and second sensels (dot). The first sensels are configured to sense a first image 12A from a first divergent perspective 40 and the second sensels (different from the first sensels) are configured to sense a second image 12 from a second different divergent perspective 40.

In Figs 7 and 8, each of the multiple optical arrangements 30 is a wide angle lens having a field of view greater than 180° Each of the multiple optical arrangements comprises a telecentric back focal design comprising a barrel lens 31. The telecentric back focal design provides a limited spread of light. A separation of the optical axis of the optical arrangements 30 greater than that spread of light enables the spatial resolution of the different images from the different optical arrangements 30.

The image plane 14 defined by the camera sensor 10 is not orthogonal to an optical axis of any of the multiple optical arrangements, Optical element(s) 80 are configured to tilt a focal plane of each of the multiple optical arrangements 30 so that it is parallel to the image plane 14 of the camera sensor 10. The optical axis of at least one of the multiple optical arrangements 30 may be displaced from a center of the camera sensor 10. Distortions because of different effective sensel separation over different portions of an image due to relative angle of image plane and optical axis may be corrected in post capture processing.

In the example of Fig 7, the optical elements 80 are two free-formed prisms- one is associated with each optical arrangement 30. In the example of Fig 8, the optical element(s) are free-form mirrors - one is associated with each optical arrangement 30.

Fig 7 illustrates an example of an apparatus 100 comprising: multiple optical arrangements 30 for focusing images 12 of a three-dimensional space 20 from different divergent perspectives 40 onto a single camera sensor 10 configured for spatially resolved sensing of respective images 12 from different perspectives 40, wherein each optical arrangement 30 is configured to provide an optical path 50 from a respective perspective 40, defined by the optical arrangement 30, to a target optical area 70 such that optical paths 50 from different divergent perspectives 40 converge towards the target area 70. The optical paths 50 from different divergent perspectives 40 converge towards and meet at a single camera sensor 10 occupying the target area 70.

Fig 8 illustrates an example of an apparatus 100 comprising: multiple optical arrangements 30 for focusing images 12 of a three-dimensional space 20 from different divergent perspectives 40 onto a single camera sensor 10 configured for spatially resolved sensing of respective images 12 from different perspectives 40, wherein each optical arrangement 30 is configured to provide an optical path 50 from a respective perspective 40, defined by the optical arrangement 30, to a target optical area 70 such that optical paths 50 from different divergent perspectives 40 converge towards the target area 70. The target optical area 70 comprises one or more optical elements 80 (mirrors) providing as separate optical paths, at least a part of multiple optical paths 50 from each of the multiple different divergent perspectives to the camera sensor 10.

Fig 9 illustrates an example of an apparatus 100 comprising: multiple optical arrangements 30 for focusing images 12 of a three-dimensional space 20 from different divergent perspectives 40 onto a camera sensor 10 configured for spatially resolved sensing of respective images 12 from different perspectives 40, wherein each optical arrangement 30 is configured to provide an optical path 50 from a respective perspective 40, defined by the optical arrangement 30, to a target optical area 70 such that optical paths 50 from different divergent perspectives 40 converge towards the target area 70. In this example, a single camera sensor 10 comprising a plurality of sensels is configured to sense, using different sensels, images 12 from different divergent perspectives 40. The optical paths 50 from different divergent perspectives 40 converge towards and pass through the target area 70 before arriving at the sensor 10. In some but not necessarily all examples, each of the multiple optical arrangements 30 is configured as a plenoptic lens in a plenoptic lens array, enabling the camera sensor 10 to operate as a light field camera. The optical arrangements 30 comprise prisms on the top and focusing lenses on the bottom.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one" or by using "consisting".

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

## Claims

1. An apparatus (100) comprising:
a single camera sensor (10); and
multiple optical arrangements (30) for focusing images of a three-dimensional space from different divergent perspectives (40) onto the camera sensor (10) configured for spatially resolved sensing of respective images from different divergent perspectives (40), wherein:
each optical arrangement is configured to provide an optical path (50) from a respective perspective (40), defined by the optical arrangement (30), towards a target optical area (70) such that optical paths (50) from different divergent perspectives (40) converge towards the target area (70); and
each of the multiple optical arrangements (30) comprises a prism having two facets on an input side and a focusing lens on an output side, wherein the apparatus is configured such that optical paths (50) from two, different perspectives (40) are incident on different faces of a respective prism and converge towards a respective single focusing lens.

2. An apparatus (100) as claimed in claim 1, wherein the camera sensor (10) comprises a plurality of sensels and is configured to sense, using different sensels, different images from different divergent perspectives (40).

3. An apparatus (100) as claimed in claim 2, wherein the camera sensor (10) comprises alternating rows or columns of first sensels and second sensels, wherein the first sensels are configured to sense a first image from a first divergent perspective (40) and wherein the second sensels are configured to sense a second image from a second divergent perspective (40).

4. An apparatus (100) as claimed in any preceding claim, wherein at least some of the divergent perspectives (40) lie within a common plane and are evenly distributed with the same angular separation within that plane.

5. An apparatus as claimed in any preceding claim, wherein each of the multiple optical arrangements has an associated field of view and the fields of view of at least some of the multiple optical arrangements (30) overlap spatially.

6. An apparatus (100) as claimed in claim 5, wherein the fields of view spatially overlap in a horizontal direction and in a vertical direction forming a panoramic image that extends both vertically and horizontally.

7. An apparatus (100) as claimed in any preceding claim, wherein each optical arrangement is configured to provide divergent optical paths (50) from the different divergent perspectives (40) to the camera sensor (10).

8. An apparatus (100) as claimed in any of claims 1 to 7, wherein each of the multiple optical arrangements (30) is configured as a plenoptic lens in a plenoptic lens array, enabling the camera sensor (10) to operate as a light field camera.

9. An apparatus (100) as claimed in any preceding claim, wherein each of the multiple optical arrangements (30) comprises a prism on the top and a focussing lens on the bottom.

## Patentansprüche

1. Vorrichtung (100), die Folgendes umfasst:
einen einzelnen Kamerasensor (10); und
mehrere optische Anordnungen (30) zum Fokussieren von Bildern eines dreidimensionalen Raums aus verschiedenen divergierenden Perspektiven (40) auf den Kamerasensor (10), der zum räumlichen aufgelösten Erfassen von jeweiligen Bildern aus verschiedenen divergierenden Perspektiven (40) ausgelegt ist, wobei:
jede optische Anordnung dazu ausgelegt ist, von einer jeweiligen Perspektive (40), die durch die optische Anordnung (30) definiert ist, einen optischen Pfad (50) zu einem optischen Zielbereich (70) bereitzustellen, derart, dass optische Pfade (50) aus verschiedenen divergierenden Perspektiven (40) zum Zielbereich (70) konvergieren; und
jede der mehreren optischen Anordnungen (30) ein Prisma umfasst, das auf einer Eingabeseite zwei Facetten und auf einer Ausgabeseite eine Fokussierlinse aufweist, wobei die Vorrichtung derart ausgelegt ist, dass optische Pfade (50) aus zwei verschiedenen Perspektiven (40) auf verschiedene Flächen eines jeweiligen Prismas einfallen und zu einer jeweiligen einzelnen Fokussierlinse konvergieren.

2. Vorrichtung (100) nach Anspruch 1, wobei der Kamerasensor (10) eine Vielzahl von Senseln umfasst und dazu ausgelegt ist, unter Verwendung von verschiedenen Senseln verschiedene Bilder aus verschiedenen divergierenden Perspektiven (40) zu erfassen.

3. Vorrichtung (100) nach Anspruch 2, wobei der Kamerasensor (10) alternierende Zeilen oder Spalten von ersten Senseln und zweiten Senseln umfasst, wobei die ersten Sensel dazu ausgelegt sind, ein erstes Bild aus einer ersten divergierenden Perspektive (40) zu erfassen, und wobei das zweite Sensel dazu ausgelegt ist, ein zweites Bild aus einer zweiten divergierenden Perspektive (40) zu erfassen.

4. Vorrichtung (100) nach einem der vorhergehenden Ansprüche, wobei mindestens einige der divergierenden Perspektiven (40) auf einer gemeinsamen Ebene liegen und mit derselben Winkeltrennung auf dieser Ebene gleichmäßig verteilt sind.

5. Vorrichtung nach einem der vorhergehenden Ansprüche, wobei jede der mehreren optischen Anordnungen ein zugehöriges Sichtfeld aufweist und sich die Sichtfelder von mindestens einigen der mehreren optischen Anordnungen (30) räumlich überlappen.

6. Vorrichtung (100) nach Anspruch 5, wobei sich die Sichtfelder in einer horizontalen Richtung und einer vertikalen Richtung räumlich überlappen und ein Panoramabild bilden, das sich sowohl vertikal als auch horizontal erstreckt.

7. Vorrichtung (100) nach einem der vorhergehenden Ansprüche, wobei jede optische Anordnung dazu ausgelegt ist, divergierende optische Pfade (50) aus den verschiedenen divergierenden Perspektiven (40) für den Kamerasensor (10) bereitzustellen.

8. Vorrichtung (100) nach einem der Ansprüche 1 bis 7, wobei jede der mehreren optischen Anordnungen (30) als eine plenoptische Linse in einem plenoptischen Linsenarray ausgelegt ist, wodurch es dem Kamerasensor (10) ermöglicht wird, als eine Lichtfeldkamera betrieben zu werden.

9. Vorrichtung (100) nach einem der vorhergehenden Ansprüche, wobei jede der mehreren optischen Anordnungen (30) oben ein Prisma und unten eine Fokussierlinse umfasst.

## Revendications

1. Appareil (100) comprenant :
un capteur de caméra (10) unique ; et
de multiples agencements optiques (30) pour focaliser les images d'un espace tridimensionnel sous différentes perspectives (40) divergentes sur le capteur de caméra (10) configuré pour une détection à résolution spatiale d'images respectives provenant de différentes perspectives (40) divergentes, dans lequel :
chaque agencement optique est configuré pour fournir un chemin optique (50) provenant d'une perspective (40) respective définie par l'agencement optique (30), vers une zone optique cible (70) de sorte que les chemins optiques (50) provenant de différentes perspectives (40) divergentes convergent vers la zone cible (70) ; et
chacun des multiples agencements optiques (30) comprend un prisme ayant deux facettes sur un côté d'entrée et une lentille de focalisation sur un côté de sortie, dans lequel l'appareil est configuré de sorte que les chemins optiques (50) provenant de deux perspectives (40) différentes soient incidents sur différentes faces d'un prisme respectif et convergent vers une seule lentille de focalisation respective.

2. Appareil (100) selon la revendication 1, dans lequel le capteur de caméra (10) comprend une pluralité de SENSEL et est configuré pour détecter, à l'aide de différents SENSEL, différentes images provenant de différentes perspectives (40) divergentes.

3. Appareil (100) selon la revendication 2, dans lequel le capteur de caméra (10) comprend des rangées ou des colonnes alternées de premiers SENSEL et de deuxièmes SENSEL, dans lequel les premiers SENSEL sont configurés pour détecter une première image provenant d'une première perspective (40) divergente, et dans lequel les deuxièmes SENSEL sont configurés pour détecter une deuxième image provenant d'une deuxième perspective (40) divergente.

4. Appareil (100) selon l'une des revendications précédentes, dans lequel au moins certaines des perspectives (40) divergentes se trouvent dans un plan commun et sont réparties uniformément suivant la même séparation angulaire dans ce plan.

5. Appareil selon l'une des revendications précédentes, dans lequel chacun des multiples agencements optiques a un champ de vision associé et les champs de vision d'au moins certains des multiples agencements optiques (30) se chevauchent dans l'espace.

6. Appareil (100) selon la revendication 5, dans lequel les champs de vision se chevauchent dans l'espace dans une direction horizontale et dans une direction verticale formant une image panoramique qui s'étend à la fois verticalement et horizontalement.

7. Appareil (100) selon l'une des revendications précédentes, dans lequel chaque agencement optique est configuré pour fournir des chemins optiques (50) divergents provenant des différentes perspectives (40) divergentes vers le capteur de caméra (10).

8. Appareil (100) selon l'une des revendications 1 à 7, dans lequel chacun des multiples agencements optiques (30) est configuré comme une lentille plénoptique dans un réseau de lentilles plénoptiques, permettant au capteur de caméra (10) de fonctionner comme une caméra à champ lumineux.

9. Appareil (100) selon l'une des revendications précédentes, dans lequel chacun des multiples agencements optiques (30) comprend un prisme sur le dessus et une lentille de focalisation sur le dessous.
